# EUROPÄISCHE PATENTSCHRIFT

(11) **EP 0 845 050 B1**
(45) Veröffentlichungstag und Bekanntmachung des Hinweises auf die Patenterteilung: **26.05.1999**
(21) Anmeldenummer: 96925650.2
(22) Anmeldetag: 06.08.1996
(51) Int. Cl.: C22C 30/00, C22C 19/00

(54) **ERZEUGNIS ZUR FÜHRUNG EINES HEISSEN, OXIDIERENDEN GASES**
PRODUCT USED TO GUIDE A HOT OXIDIZING GAS
ELEMENT PERMETTANT LE GUIDAGE D'UN GAZ CHAUD OXYDANT

(30) Priorität: 16.08.1995 DE 19530125; 16.04.1996 DE 19615012
(43) Veröffentlichungstag der Anmeldung: 03.06.1998
(73) Patentinhaber: SIEMENS AKTIENGESELLSCHAFT, 80333 München (DE)
(72) Erfinder: CZECH, Norbert, D-46286 Dorsten (DE)
(86) Internationale Anmeldenummer: DE9601465
(87) Internationale Veröffentlichungsnummer: WO9707252

(56) Entgegenhaltungen:
- EP-A- 0 532 150
- US-A- 3 898 081
- US-A- 5 262 245

## Beschreibung

Die Erfindung betrifft ein Erzeugnis zur Führung eines heißen, oxidierenden Gases mit einer von dem Gas zu beaufschlagenden Oberfläche, welche von einer Legierung gebildet ist, die folgende wesentliche Gewichtsanteile aufweist: Chrom 10 % bis 40 %, wahlweise weitere Elemente, darunter Aluminium 0 % bis 20 %, Silizium 0 % bis 10 %, reaktive Elemente aus der Gruppe umfassend Yttrium, Scandium und die Elemente der Seltenen Erden, sowie einem Rest, im folgenden auch als Grundlage bereichnet, aus einem Element oder mehreren Elementen aus der Gruppe umfassend Eisen, Kobalt und Nickel.

Die Erfindung bezieht sich insbesondere auf ein Erzeugnis zur Führung eines heißen, oxidierenden Gases, wobei das Gas Eigenschaften hat, die üblicherweise bei einem Rauchgas in einer Gasturbine vorliegen; die Erfindung bezieht sich in diesem Zusammenhang besonders auf ein Bauteil, welches in einer Gasturbine zur Führung eines Rauchgases dient. Dieses Bauteil kann eine Laufschaufel oder Leitschaufel, ein Hitzeschild oder ein anderes thermisch hochbelastetes Bauteil einer Gasturbine sein. Besonders in Betracht gezogen wird ein solches Bauteil, welches betrieblich ein Rauchgas mit einer mittleren Temperatur von mehr als 1000 °C, insbesondere zwischen 1200 °C und 1400 °C führt.

Die Legierung in dem Erzeugnis ist insbesondere eine Legierung der Art MCrAlY, wobei M für die Grundlage der Legierung steht und zumindest ein Element aus der Gruppe umfassend Eisen, Kobalt und Nickel bezeichnet, und wobei die Legierung weiterhin gekennzeichnet ist durch Gewichtsanteile von Chrom, Aluminium und Yttrium oder einem dem Yttrium äquivalenten Element, ausgewählt aus einer Gruppe umfassend Skandium sowie die Elemente der Seltenen Erden. Auch kann die Legierung des Typs MCrAlY Gewichtsanteile weiterer Elemente aufweisen; als Beispiel genannt sei Rhenium.

Die Erfindung bezieht sich auch auf ein Erzeugnis mit einem Substrat aus einer Nickel-Basis- oder Kobalt-Basis-Superlegierung, beispielsweise eine Gasturbinenschaufel oder ein anderes thermisch und chemisch hoch belastetes Bauteil einer Gasturbine, welches eine Schutzschicht aus einer Legierung des genannten Typs aufweist.

Substrate für thermisch und chemisch hoch belastete Erzeugnisse, wie sie insbesondere in Gasturbinen verbaut sind, werden vorzugsweise aus Superlegierungen auf Nickel- oder Kobaltbasis hergestellt , je nach verwendeter Superlegierung durch Gießen oder Schmieden. Beim Gießen eines derartigen Substrats kann unter Umständen zurückgegriffen werden auf eine Technik, die als "gerichtetes Erstarren" bekannt ist und ein Substrat mit anisotropen und/oder räumlich geordnetem Gefüge, insbesondere einkristallinem Gefüge, liefert. Die allgemein in Frage kommenden Superlegierungen zeichnen sich generell aus durch hervorragende mechanische Eigenschaften bei den während des Betriebs der daraus hergestellten Erzeugnisse auftretenden Temperaturen; ihre chemischen Eigenschaften sind mitunter jedoch derart, daß sie besondere Maßnahmen zum Schutz gegen Korrosion erfordern. Um diesen Schutz zu bieten, sind spezielle Schutzschichten für Superlegierungen entwikkelt worden, insbesondere die Schutzschichten aus Legierungen des Typs MCrAlY.

Typische Schutzschichten solcher Art sind bekannt aus der EP 0 412 397 A1. In dieser Schrift ist eine Schutzschicht mit großer Korrosions- und Oxidationsbeständigkeit beschrieben, die gekennzeichnet ist dadurch, daß sie einen Gewichtsanteil von Rhenium enthält. Die Schutzschicht weist im einzelnen Gewichtsanteile folgender Elemente auf: 1 % bis 20 % Rhenium, 22 % bis 50 % Chrom, 0 % bis 15 % Aluminium, wobei die Gewichtsanteile von Chrom und Aluminium zusammen mindestens 25 % und höchstens 53 % betragen, 0,3 % bis 2 % Yttrium oder eines dem Yttrium äquivalenten Elements sowie 0 % bis 3 % Silicium. Die Grundlage der die Schutzschicht bildenden Legierung besteht aus mindestens einem der Elemente Eisen, Nickel und Kobalt, daneben herstellungsbedingte Verunreinigungen in üblichen Gewichtsanteilen. Wahlweise kann die Schutzschicht zusätzlich Gewichtsanteile folgender Elemente enthalten: Hafnium bis zu 5 %, Wolfram bis zu 12 %, Mangan bis zu 10 %, Tantal bis zu 5 %, Titan bis zu 5 %, Niob bis zu 4 % und Zirkonium bis zu 2 %. Die Summe der Gewichtsanteile dieser Elemente soll maximal 15 % betragen.

Weitere Zusammensetzungen für Schutzschichten aus Legierungen des Typs MCrAlY sind beschrieben in der EP 0 532 150 A1, wobei als Grundlage der Legierung jeweils Nickel verwendet wird. Neben den stets anwesenden Elementen Kobalt, Chrom und Aluminium kommen die Elemente Rhenium, Hafnium, Yttrium, Silizium, Zirkonium, Kohlenstoff und Bor als zusätzliche Elemente in Frage. In jedem Fall liegt der Gewichtsanteil von Aluminium in einer solchen Legierung zwischen 6 % und 12 %.

In dem US-Patent 4,451,299 sind Schutzschichten des Typs MCrAlY oder MCrAlHf (Hf steht für Hafnium, das unter Umständen Yttrium ersetzen kann) beschrieben, die Gewichtsanteile von Aluminium zwischen 7 % und 20 % aufweisen. Nickel, Kobalt und Eisen oder Mischungen aus zumindest zweien dieser Elemente kommen als Grundlagen für die beschriebenen Legierungen in Betracht. Zusätzlich können Gewichtsanteile bis zu 10 % der Elemente Platin, Rhenium, Silizium, Tantal und Mangan vorhanden sein. Die aus den Legierungen hergestellten Schutzschichten sollen für einen Temperaturbereich zwischen 650 °C und 820 °C geeignet sein.

In der EP 0 207 874 A2 ist eine Zusammensetzung für eine Legierung angegeben, die folgende Gewichtsanteile enthält 7,5 % bis 11 % Aluminium, 9 % bis 16 % Chrom, 2 % bis 8 % Tantal, 0 % bis 25 % Kobalt, und deren Grundlage im wesentlichen Nickel ist. Eine solche Schutzschicht soll, aufgetragen auf einem Substrat aus einer entsprechend ausgewählten Superlegierung, eine besonders hohe Diffusionsstabilität besitzen.

Die Diffusionsstabilität soll darin bestehen, daß sich zwischen dem Substrat und der darauf aufgetragenen Schutzschicht nur eine geringe Diffusionszone bildet, in der sich Elemente aus dem Substrat mit Elementen aus der Schutzschicht vermischen. Hierdurch wird erreicht, daß allenfalls ein unwesentlicher Anteil des Aluminiums aus der Schutzschicht in das Substrat hineindiffundiert, wodurch die Schutzschicht die Fähigkeit zur Bildung eines für die Oxidationsbeständigkeit wesentlichen Films von Aluminiumoxid auf ihrer Oberfläche verlieren könnte.

Die US-Patente 4,321,310 und 4,321,311 betreffen jeweils ein Erzeugnis in Form einer Gasturbinenkomponente, bestehend aus einem Substrat aus einer Superlegierung, einer darauf aufgebrachten metallischen Schutzschicht des Typs McrAlY und einer auf dieser angebrachten, stengelkristallinen keramischen Schicht, welche als sogenannte Wärmedämmschicht fungiert. Durch diese Wärmedämmschicht ist es möglich, die thermische Belastbarkeit des Erzeugnisses zu erhöhen, da die Wärmedämmschicht eine hohe Temperaturdifferenz aufnimmt und so verhindert, daß die metallischen Teile des Erzeugnisses unzuträglich belastet werden. Die Wärmedämmschicht wird an das Erzeugnis angebunden über einen dünnen Film aus Aluminiumoxid, welcher durch oberflächliche Oxidation der metallischen Schutzschicht gebildet wird. Diese oberflächliche Oxidation kann vor oder nach der Aufbringung der keramischen Schicht vorgenommen werden.

Das US-Patent 5,262,245 beschreibt einen Versuch, eine Superlegierung für ein Erzeugnis der in Rede stehenden Art so zu modifizieren, daß sie selbst fähig ist zur Ausbildung eines dünnen Aluminiumoxidfilms auf ihrer Oberfläche und somit die Verwendung einer metallischen Schutzschicht zur Verankerung einer keramischen Schicht, wie vorstehend beschrieben, überflüssig macht.

Das US-Patent 3,134,670 betrifft korrosionsgeschützte Legierungen, die hauptsächlich aus Eisen, Kobalt oder Nickel bestehen, und die gekennzeichnet sind durch eine Zulegierung von Gallium. Die Legierungen sollen benutzt werden zur Herstellung von Kronen, Füllungen und dergleichen in der Zahntechnik, sowie zur Herstellung von Haushaltsgegenständen wie Tafelbestecke. Durch die Zugabe von Gallium soll die Zerspanbarkeit und Polierfähigkeit einer Legierung verbessert werden, ohne ihre Härte und Zähigkeit zu verschlechtern. Auch soll die Zugabe von Gallium die Gießbarkeit der Legierung verbessern und zur Entstehung eines feinkörnigen Gefüges beitragen. Es gibt keinerlei Hinweis auf einen Einsatz einer beschriebenen Legierung im Rahmen einer ausgesprochenen Hochtemperaturanwendung.

Die Bildung eines schützenden Oxidfilms auf der Oberfläche der Schutzschicht ist für eine Legierung im Zusammenhang mit einem Erzeugnis des eingangs beschriebenen Typs eine wichtige Funktion. Da sich ein solcher Oxidfilm während des Betriebs stetig abnutzt, bedarf er einer ständigen Erneuerung. Diese Erneuerung erfolgt durch stetige Oxidation von Aluminium, welches aus der Schutzschicht an die Oberfläche diffundiert, dort mit Sauerstoff reagiert und somit Film ergänzt. Die maximale Lebensdauer einer Schutzschicht bemißt sich dementsprechend an ihrem Aluminiumgehalt, da der Schutzschicht mit dem Verlust von Aluminium die Fähigkeit zur Bildung des schützenden Oxidfilms, und damit ihre Schutzwirkung, verlorengeht. Unter dem Aspekt der Langlebigkeit ist also ein hoher Gewichtsanteil von Aluminium in einer Legierung für eine Schutzschicht erwünscht.

Ein hoher Gewichtsanteil von Aluminium führt allerdings dazu, daß die Legierung versprödet. Das Aluminium wird nämlich nicht in elementarer Form in der Legierung gespeichert, sondern, zumindest zu einem wesentlichen Anteil, in Form intermetallischer Verbindungen, insbesondere intermetallischer Verbindungen aus Nickel und Aluminium oder Kobalt und Aluminium. Dementsprechend muß der Gewichtsanteil von Aluminium in einer als Schutzschicht bestimmten Legierung auf ein gewisses Maß beschränkt bleiben. Dieses Maß wird von vielerlei Faktoren bestimmt, und Beimischungen von Elementen wie Rhenium können den maximal möglichen Gewichtsanteil von Aluminium in einer Legierung erhöhen. Als allgemeiner Richtwert für eine obere Grenze kann ein Gewichtsanteil des Aluminiums in Höhe von 15 % angesehen werden. Ein solcher Gewichtsanteil erfordert bereits sehr sorgfältige Maßnahmen zur Abstimmung der Gewichtsanteile der übrigen Elemente in der Schutzschicht, um ihre Sprödheit in vertretbaren Grenzen zu halten.

Ähnliche Probleme wie beim Aluminium gibt es auch bei dem Element Silizium, das als Bestandteil von Schutzschichten bekannt ist, und welches ebenfalls einen schützenden Oxidfilm auf einer Legierung entwickeln kann. Auch hohe Zugaben von Silizium verspröden eine Legierung, so daß auch ein Gewichtsanteil des Siliziums eine gewisse Grenze nicht überschreiten darf. Für Silizium werden Gewichtsanteile meistens kleiner als 1% gehalten.

In Ansehung der geschilderten Problematik ist es die Aufgabe der Erfindung, eine Alternative zu den bisher bekannten und erprobten Erzeugnissen zur Führung heißer, oxidierender Gase anzugeben, wobei eine Legierung zum Einsatz kommen soll, die die durch Zugabe von Aluminium und/oder Silizium erzielbaren Vorteile, insbesondere die Fähigkeit zur Ausbildung eines schützenden Oxidfilms, wahrt, jedoch die Gefahr der Versprödung, die für die bisher bekannten Zusammensetzungen stets gegeben war, vermeidet.

Zur Lösung dieser Aufgabe angegeben wird erfindungsgemäß ein Erzeugnis zur Führung eines heißen, oxidierenden Gases mit einer von dem Gas zu beaufschlagenden Oberfläche, welche von einer Legierung gebildet ist, die folgende Gewichtsanteile aufweist:

| | |
|---|---|
| Chrom | 10 % bis 40 % |
| Gallium | 1 % bis 20 % |
| Aluminium | 0 % 20 % |
| Silizium | 0 % bis 10 % |

ein reaktives Element aus der Gruppe umfassend Yttrium, Scandium und die Elemente der Seltenen Erden

| | |
|---|---|
| | 0 % bis 2 % |
| Hafnium | 0 % bis 5 % |
| Mangan | 0 % bis 10 % |
| Niob | 0 % bis 4 % |
| Platin | 0 % bis 10 % |
| Rhenium | 0 % bis 20 % |
| Tantal | 0 % bis 10 % |
| Titan | 0 % bis 5 % |
| Wolfram | 0 % bis 12 % |
| Zirkonium | 0 % bis 2 % |

sowie einen Rest aus einem Element oder mehreren Elementen aus der Gruppe umfassend Eisen, Kobalt und Nickel sowie herstellungsbedingten Verunreinigungen.

Als Beispiel für die genannten Verunreinigungen seien ohne Anspruch auf Vollständigkeit genannt Phosphor und Schwefel.

Die erfindungsgemäße Zulegierung von Gallium zu einer Legierung kann eine gewünschte Oxidationsbeständigkeit sicherstellen, wobei das Gallium vollständig oder teilweise das bisher stets erforderliche Aluminium oder Silizium substituiert. Hierdurch ergibt sich eine Legierung, die bei einem Gewichtsanteil von Aluminium von deutlich unter 15 % eine Oxidationsbeständigkeit haben kann, die der Oxidationsbeständigkeit einer bekannten Legierung mit einem Gewichtsanteil von Aluminium von mehr als 15 % entspricht, wobei die Duktilität (das Gegenteil von "Sprödheit") der Gallium enthaltenden Legierung jedoch deutlich besser ist.

Wie Aluminium und Silizium vermag Gallium einen schützenden Film aus fest haftendem Oxid auf einer Oberfläche der Legierung zu bilden, wenn diese Oberfläche Sauerstoff ausgesetzt wird, gegebenenfalls unter erhöhter Temperatur. Vorteilhaft ist dabei die nahe chemische Verwandtschaft des Galliums zu Aluminium und Silizium. Gallium bildet ein sehr stabiles Oxid (Ga₂O₃) mit einer Bildungsenthalpie von - 1815 kJ/Mol. Für Aluminiumoxid (Al₂O₃) und Siliziumdioxid (SiO₂) liegt diese Bildungsenthalpie bei - 1675 bzw. - 860 kJ/Mol. Zudem ist der Schmelzpunkt des Galliumoxids mit 1725 °C sehr hoch und vergleichbar mit dem Schmelzpunkt des Aluminiumoxids bei 2045 °C und des Siliciumoxids bei 1713 °C.

Gallium bildet mit Nickel intermetallische Verbindungen, insbesondere eine intermetallische Verbindung NiGa, die in allen in Betracht kommenden Eigenschaften entsprechenden intermetallischen Verbindungen aus Nickel und Aluminium ähnelt; gegebenenfalls kann es auch zur Bildung intermetallischer Verbindungen aus Nickel, Gallium und Aluminium, beispielsweise NiGaAl, kommen. Für chemische Systeme, die Kobalt und Gallium sowie eventuell Aluminium enthalten, sind ähnliche Verhältnisse zu erwarten wegen der großen chemischen Ähnlichkeit von Kobalt und Nickel; auch für Systeme mit Eisen und Gallium sowie eventuell Aluminium ist mit vergleichbaren Verhältnissen zu rechnen. In jedem Fall kann das in reiner Form sehr flüchtige Gallium als intermetallische Verbindung in die Legierung eingelagert werden und so auch bei erhöhten Temperaturen zur Bildung eines stabilen Oxids an der Oberfläche der Legierung zur Verfügung stehen.

Der Gewichtsanteil von Chrom in der erfindungsgemäßen Legierung liegt zwischen 10 % und 40 %.

Der Gewichtsanteil des Aluminiums in der Legierung, die die Oberfläche des erfindungsgemäßen Erzeugnisses bildet, beträgt vorzugsweise bis 10 %. Damit ist insbesondere sichergestellt, daß es zu keiner unerwünschten Versprödung der Legierung durch das Aluminium kommen kann.

Aus einer analogen Überlegung heraus, wie soeben ausgeführt, ist der Gewichtsanteil des Siliziums in der Legierung des erfindungsgemäßen Erzeugnisses vorzugsweise begrenzt auf einen Wert bis 2 %.

Ebenfalls bevorzugt ist es, daß die Legierung des Erzeugnisses einen Gewichtsanteil eines reaktiven Elements aus der Gruppe umfassend Yttrium, Scandium und die Metalle der Seltenen Erden enthält. Die Wirkung solcher reaktiver Elemente ist aus der Praxis mit MCrAlY-Legierungen gut bekannt und wird in vergleichbarer Weise auch für die Legierung im vorliegenden Zusammenhang erwartet. Das reaktive Element ist vorzugsweise Yttrium, und sein Gewichtsanteil beträgt bis 2 %.

Ebenfalls bevorzugt ist es, daß die Grundlage Kobalt und/oder Nickel, jedoch kein Eisen enthält. Auch dies ist bekannt aus der einschlägigen Praxis mit den MCrAlY-Legierungen.

Weiterhin bevorzugt enthält die Legierung des Erzeugnisses einen Gewichtsanteil von Aluminium, so daß das Gallium neben dem Aluminium zur Wirkung kommt. Der Gewichtsanteil von Aluminium beträgt vorzugsweise bis 10 %, da das Gallium die Wirkung des Aluminiums zumindest teilweise unterstützt und ergänzt. In diesem Sinne ist der Gewichtsanteil von Aluminium weiterhin bevorzugt größer als der Gewichtsanteil von Gallium, wobei außerdem bevorzugt die Summe der Gewichtsanteile von Aluminium bzw. Gallium bis 20 % beträgt.

Generell ist es bevorzugt, daß der Gewichtsanteil von Gallium in der Legierung bis 15 % beträgt.

Außerdem bevorzugt ist eine Weiterbildung des Erzeugnisses, bei der die Legierung einen Gewichtsanteil von Rhenium aufweist. Der Gewichtsanteil von Rhenium beträgt dabei insbesondere bis zu 20 %, vorzugsweise bis zu 15 %.

Eine andere Weiterbildung des Erzeugnisses zeichnet sich dadurch aus, daß es eine Oberfläche hat, die von einem zumindest teilweise aus Galliumoxid bestehenden Film bedeckt ist.

Eine besonders bevorzugte Ausgestaltung des Erzeugnisses zeichnet sich aus durch eine Legierung mit einer Grundlage von Nickel und Gewichtsanteile folgender Elemente: Kobalt 5 % bis 20 %, Chrom 20 % bis 30 %, Aluminium 5 % bis 12 %, Gallium 3 % bis 8 %, Yttrium 0,2 % bis 1 % sowie Rhenium 0 % bis 5 %. Die Anwesenheit herstellungsbedingter Verunreinigungen in üblichen Gewichtsanteilen ist selbstverständlich in Betracht zu ziehen, auch kommen Gewichtsanteile weiterer Elemente und Zusätze in Frage.

Eine besonders bevorzugte Zusammensetzung für die soeben beschriebene Legierung zeichnet sich aus durch folgende Gewichtsanteile: Kobalt 8 % bis 16 %, Chrom 21 % bis 27 %, Aluminium 6 % bis 10 %, Gallium 4 % bis 6 %, Yttrium 0,4 % bis 0,8 % sowie Rhenium 2 % bis 4 %.

Jedwede der beschriebenen Legierungen kann zusätzlich weitere Elemente aufweisen, insbesondere: Hafnium 0 % bis 5 %, Wolfram 0 % bis 12 %, Mangan 0 % bis 10 %, Tantal 0 % bis 5 %, Titan 0 % bis 5 %, Niob 0 % bis 4 % sowie Zirkonium 0 % bis 2 %.

Die Legierung in dem Erzeugnis ist bevorzugtermaßen eine Schutzschicht auf einem metallischen Substrat, insbesondere auf einem Substrat aus einer Nickelbasis- oder Kobaltbasis-Superlegierung. Das Substrat ist dabei insbesondere ein Bauteil zur Führung eines heißen, oxidierenden Gases, insbesondere in einer Gasturbine.

Auf der Schutzschicht des Erzeugnisses ist weiterhin vorzugsweise eine gasdurchlässige keramische Schicht aufgetragen, wobei diese keramische Schicht insbesondere ein stengelkristallines Gefüge hat. Eine solche keramische Schicht ist insbesondere als Wärmedämmschicht für ein Erzeugnis in Form einer Komponente für eine Gasturbine vorgesehen, wobei das Erzeugnis während seines Betriebs einer Temperatur ausgesetzt ist, die 1000 °C wesentlich überschreitet und je nach Anwendung bis knapp an den Schmelzpunkt des Substrates heranreichen kann. Die keramische Schicht besteht vorzugsweise aus einem teilstabilierten Zirkonoxid, d.h. aus einem Werkstoff, welcher außer Zirkonoxid als Hauptbestandteil ein anderes Oxid, beispielsweise Lanthanoxid, Ceroxid, Calciumoxid, Yttriumoxid oder Magnesiumoxid aufweist. Durch die Beimischung des anderen Oxids wird die kristalline Struktur des Zirkonoxids stabilisiert und verhindert, daß es in dem Zirkonoxid unter thermischer Belastung zu einem Phasenübergang kommt, bei welchem sich die kristalline Struktur des Zirkonoxids wesentlich verändert. Außerdem vorzugsweise haftet die keramische Schicht auf einem auf der Oberfläche haftenden und Galliumoxid enthaltenden Film, welcher gebildet wird durch Oxidation der Legierung vor oder nach dem Auftragen der keramischen Schicht.

Für das Substrat, auf dem die Legierung aufgetragen sein soll, wird eine Zusammensetzung mit einer Grundlage von Nikkel und zusätzlichen Elementen in folgenden Gewichtsanteilen bevorzugt: 0,06 % bis 0,14 % Kohlenstoff, 10 % bis 20 % Chrom, 6 % bis 11 % Kobalt, 1 % bis 3 % Molybdän, 1 % bis 6 % Wolfram, 1 % bis 6 % Tantal, 0 % bis 2 % Niob, 1 % bis 6 % Aluminium, 1 % bis 6 % Titan, 0 % bis 0,3 % Bor und 0 % bis 0,2 % Zirkonium.

Es folgt eine Beschreibung eines bevorzugten Ausführungsbeispiels der Erfindung:

Auf ein Substrat in Form einer thermisch, mechanisch und korrosiv hoch belasteten Komponente einer Gasturbine, insbesondere einer Turbinenschaufel für eine Gasturbine, welche betrieblich einem heißen Rauchgas mit einer Temperatur von 1300 °C oder mehr ausgesetzt ist, wird eine Legierung als Schutzschicht aufgetragen, wobei das Auftragen durch Vakuum-Plasmaspritzen mit üblichen Nachbehandlungen erfolgt. Die Legierung hat eine Grundlage von Nickel und weist darüber hinaus folgende Gewichtsanteile auf: 10 % Kobalt, 23 % Chrom, 8 % Aluminium, 5 % Gallium, 3 % Rhenium und 0,6 % Yttrium. Das Substrat besteht aus einer Nickelbasis-Superlegierung herkömmlichen Typs; solche Superlegierungen sind unter den Bezeichnungen IN 738 sowie PWA 1483 bekannt.

Neben dem Vakuum-Plasmaspritzen sind andere Möglichkeiten zum Aufbringen der Schutzschicht die verschiedenen und an sich bekannten Verfahren der physikalischen Dampfabscheidung (PVD) bzw. der chemischen Dampfabscheidung (CVD). Zum Aufbringen einer keramischen Schicht auf die Schutzschicht kommt insbesondere ein PVD-Verfahren zum Einsatz.

Es wird erwartet, daß sich die Schutzschicht während des Betriebs, wenn sie mit einem Rauchgas belastet wird, welches Sauerstoff enthält, mit einem Film überzieht, welcher zumindest teilweise aus Galliumoxid besteht. Es wird außerdem erwartet, daß die Schutzschicht bei deutlich erhöhter Lebensdauer eine gegenüber einer Schutzschicht, die kein Gallium, dafür aber einen entsprechend erhöhten Gewichtsanteil aus Aluminium aufweist, deutlich verbesserte Duktilität hat. Auf diese Weise ist die Gallium enthaltende Schutzschicht deutlich weniger anfällig gegenüber Rißbildung, was einen zusätzlichen sehr positiven Effekt auf ihre Lebensdauer hat.

Durch den Zusatz von Gallium wird eine gegenüber den Legierungen des Standes der Technik deutlich erhöhte Lebensdauer für die Legierung erwartet. Ist die thermische Belastung des Erzeugnisses während seines Betriebes sehr hoch, kann die von der Legierung gebildete Oberfläche mit einer keramischen Schicht, vorzugsweise einer keramischen Schicht mit stengelkristallinem Gefüge und bestehend aus teilstabilisiertem Zirkonoxid, überzogen werden. Die Schicht wird dabei insbesondere angebunden an einen Galliumoxid enthaltenden, durch Oxidation der Legierung gebildeten Film, welcher auf der Oberfläche haftet.

## Patentansprüche

1. Erzeugnis zur Führung eines heißen, oxidierenden Gases mit einer von dem Gas zu beaufschlagenden Oberfläche, welche von einer Legierung gebildet ist, die folgende Gewichtsanteile aufweist:
| | |
|---|---|
| Chrom | 10 % bis 40 % |
| Gallium | 1 % bis 20 % |
| Aluminium | 0 % bis 20 % |
| Silizium | 0 % bis 10 % |
ein reaktives Element aus der Gruppe umfassend Yttrium, Scandium und die Elemente der Seltenen Erden
| | |
|---|---|
| | 0 % bis 2 % |
| Hafnium | 0 % bis 5 % |
| Mangan | 0 % bis 10 % |
| Niob | 0 % bis 4 % |
| Platin | 0 % bis 10 % |
| Rhenium | 0 % bis 20 % |
| Tantal | 0 % bis 10 % |
| Titan | 0 % bis 5 % |
| Wolfram | 0 % bis 12 % |
| Zirkonium | 0 % bis 2 % |
sowie einen Rest aus einem Element oder mehreren Elementen aus der Gruppe umfassend Eisen, Kobalt und Nickel sowie herstellungsbedingten Verunreinigungen.

2. Erzeugnis nach Anspruch 1, bei dem der Gewichtsanteil des Aluminiums bis 10 % beträgt.

3. Erzeugnis nach Anspruch 1 oder 2, bei dem der Gewichtsanteil des Siliziums bis 2 % beträgt.

4. Erzeugnis nach einem der vorigen Ansprüche, bei dem das reaktive Element Yttrium ist und sein Gewichtsanteil bis 2% beträgt.

5. Erzeugnis nach einem der vorigen Ansprüche, bei dem die Legierung als Grundlage nur Kobalt und/oder Nickel enthält.

6. Erzeugnis nach einem der vorigen Ansprüche, bei dem die Legierung Aluminium enthält.

7. Erzeugnis nach Anspruch 6, bei dem der Gewichtsanteil des Aluminiums größer ist als der Gewichtsanteil des Galliums.

8. Erzeugnis nach Anspruch 6 oder 7, bei dem die Summe der Gewichtsanteile von Aluminium bzw. Gallium bis 20 % beträgt.

9. Erzeugnis nach einem der vorigen Ansprüche, bei dem der Gewichtsanteil des Galliums bis bis 15 % beträgt.

10. Erzeugnis nach einem der vorigen Ansprüche, bei dem der Gewichtsanteil des Rheniums bis zu 15 % beträgt.

11. Erzeugnis nach einem der vorigen Ansprüche, bei dem die Oberfläche von einem zumindest teilweise aus Galliumoxid bestehenden Film bedeckt ist.

12. Erzeugnis nach einem der vorigen Ansprüche,bei dem der Rest der Legierung Nickel ist und die Legierung folgende Gewichtsanteile aufweist:
| | |
|---|---|
| Kobalt | 5 % bis 20 % |
| Chrom | 20 % bis 30 % |
| Aluminium | 5 % bis 12 % |
| Gallium | 3 % bis 8 % |
| Yttrium | 0,2 % bis 1 % |
| Rhenium | 0 % bis 5 %. |

13. Erzeugnis nach Anspruch 12, bei dem die Legierung folgende Gewichtsanteile aufweist:
| | |
|---|---|
| Kobalt | 8 % bis 16 % |
| Chrom | 21 % bis 27 % |
| Aluminium | 6 % bis 10 % |
| Gallium | 4 % bis 6 % |
| Rhenium | 2 % bis 4 %. |
| Yttrium | 0,4 % bis 0,8 %. |

14. Erzeugnis nach einem der vorigen Ansprüche, bei dem die Legierung als Schutzschicht auf einem metallischen Substrat, insbesondere auf einem Substrat aus einer Nickelbasis- oder Kobaltbasis-Superlegierung, aufgetragen ist.

15. Erzeugnis nach Anspruch 14, bei dem eine gasdurchlässige keramische Schicht, die insbesondere ein stengelkristallines Gefüge hat, auf die Oberfläche aufgetragen ist.

16. Erzeugnis nach Anspruch 15, bei dem die keramische Schicht aus einem teilstabilisierten Zirkonoxid besteht.

17. Erzeugnis nach Anspruch 15 oder 16, bei dem die keramische Schicht auf einem Galliumoxid enthaltenden, auf der Oberfläche haftenden Film haftet.

18. Erzeugnis nach einem der Ansprüche 14 bis 17, bei dem das Substrat als Rest Nickel hat und folgende Gewichtsanteile aufweist:
| | |
|---|---|
| 0,06 % bis 0,14 % | Kohlenstoff |
| 10 % bis 20 % | Chrom |
| 6 % bis 11 % | Kobalt |
| 1 % bis 3 % | Molybdän |
| 1 % bis 6 % | Wolfram |
| 1 % bis 6 % | Tantal |
| 0 % bis 2 % | Niob |
| 1 % bis 6 % | Aluminium |
| 1 % bis 6 % | Titan |
| 0 % bis 0,3 % | Bor |
| 0 % bis 0,2 % | Zirkonium. |

## Claims

1. Product for directing a hot, oxidizing gas having a surface to be exposed to the gas, which surface is made of an alloy having the following proportions by weight:
| | |
|---|---|
| Chromium | from 10% to 40% |
| Gallium | from 1% to 20% |
| Aluminium | from 0% to 20% |
| Silicon | from 0% to 10% |
a reactive element selected from the group consisting of yttrium, scandium and the rare earth elements,
| | |
|---|---|
| | from 0% to 2% |
| Hafnium | from 0% to 5% |
| Manganese | from 0% to 10% |
| Niobium | from 0% to 4% |
| Platinum | from 0% to 10% |
| Rhenium | from 0% to 20% |
| Tantalum | from 0% to 10% |
| Titanium | from 0% to 5% |
| Tungsten | from 0% to 12% |
| Zirconium | from 0% to 2% |
and also a balance of an element or a plurality of elements selected from the group consisting of iron, cobalt and nickel, plus impurities resulting from the manufacturing process.

2. Product according to Claim 1, wherein the proportion by weight of aluminium is up to 10%.

3. Product according to Claim 1 or 2, wherein the proportion by weight of silicon is up to 2%.

4. Product according to any of the preceding claims, wherein the reactive element is yttrium and its proportion by weight is up to 2%.

5. Product according to any of the preceding claims, wherein the alloy contains as basis only cobalt and/or nickel.

6. Product according to any of the preceding claims, wherein the alloy contains aluminium.

7. Product according to Claim 6, wherein the proportion by weight of aluminium is greater than the proportion by weight of gallium.

8. Product according to Claim 6 or 7, wherein the sum of the proportions by weight of aluminium and gallium is up to 20%.

9. Product according to any of the preceding claims, wherein the proportion by weight of gallium is up to 15%.

10. Product according to any of the preceding claims, wherein the proportion by weight of rhenium is up to 15%.

11. Product according to any of the preceding claims, wherein the surface is covered by a film consisting at least partially of gallium oxide.

12. Product according to any of the preceding claims, wherein the balance of the alloy is nickel and the alloy has the following proportions by weight:
| | |
|---|---|
| Cobalt | from 5% to 20% |
| Chromium | from 20% to 30% |
| Aluminium | from 5% to 12% |
| Gallium | from 3% to 8% |
| Yttrium | from 0.2% to 1% |
| Rhenium | from 0% to 5%. |

13. Product according to Claim 12, wherein the alloy has the following proportions by weight:
| | |
|---|---|
| Cobalt | from 8% to 16% |
| Chromium | from 21% to 27% |
| Aluminium | from 6% to 10% |
| Gallium | from 4% to 6% |
| Rhenium | from 2% to 4% |
| Yttrium | from 0.4% to 0.8%. |

14. Product according to any of the preceding claims, wherein the alloy is applied as protective layer to a metallic substrate, in particular a substrate comprising a nickel-based or cobalt-based superalloy.

15. Product according to Claim 14, wherein a gas-permeable ceramic layer, in particular one having a microstructure composed of columnar crystals, is applied to the surface.

16. Product according to Claim 15, wherein the ceramic layer comprises a partially stabilized zirconium oxide.

17. Product according to Claim 15 or 16, wherein the ceramic layer adheres to a film adhering to the surface and containing gallium oxide.

18. Product according to any of Claims 14 to 17, wherein the substrate has nickel as balance and has the following proportions by weight:
| | |
|---|---|
| from 0.06% to 0.14% | of carbon |
| from 10% to 20% | of chromium |
| from 6% to 11% | of cobalt |
| from 1% to 3% | of molybdenum |
| from 1% to 6% | of tungsten |
| from 1% to 6% | of tantalum |
| from 0% to 2% | of niobium |
| from 1% to 6% | of aluminium |
| from 1% to 6% | of titanium |
| from 0% to 0.3% | of boron |
| from 0% to 0.2% | of zirconium. |

## Revendications

1. Elément permettant de guider un gaz chaud oxydant, comprenant une surface qui doit être alimentée par le gaz et qui est formée d'un alliage ayant les proportions pondérales suivantes :
| | |
|---|---|
| chrome | 10 % à 40 % |
| gallium | 1 % à 20 % |
| aluminium | 0 % à 20 % |
| silicium | 0 % à 10 % |
un élément réactif choisi dans le groupe comprenant l'yttrium, le scandium et les éléments des terres rares
| | |
|---|---|
| | 0 % à 2% |
| hafnium | 0 % à 5 % |
| manganèse | 0 % à 10 % |
| niobium | 0 % à 4 % |
| platine | 0 % à 10 % |
| rhénium | 0 % à 20 % |
| tantale | 0 % à 10 % |
| titane | 0 % à 5 % |
| tungstène | 0 % à 12 % |
| zirconium | 0 % à 2 % |
ainsi qu'un reste constitué d'un élément ou de plusieurs éléments choisis dans le groupe comprenant le fer, le cobalt et le nickel, ainsi que des impuretés de fabrication.

2. Elément suivant la revendication 1, dans lequel la proportion pondérale de l'aluminium représente jusqu'à 10 %.

3. Elément suivant la revendication 1 ou 2, dans lequel la proportion pondérale du silicium représente jusqu'à 2 %.

4. Elément suivant l'une des revendications précédentes, dans lequel l'élément réactif est l'yttrium et sa proportion pondérale représente jusqu'à 2 %.

5. Elément suivant l'une des revendications précédentes, dans lequel l'alliage ne renferme comme élément de base que du cobalt et/ou du nickel.

6. Elément suivant l'une des revendications précédentes, dans lequel l'alliage renferme de l'aluminium.

7. Elément suivant la revendication 6, dans lequel la proportion pondérale d'aluminium est supérieure à la proportion pondérale du gallium.

8. Elément suivant la revendication 6 ou 7, dans lequel la somme des proportions pondérales d'aluminium et de gallium représente jusqu'à 20 %.

9. Elément suivant l'une des revendications précédentes, dans lequel la proportion pondérale du gallium représente jusqu'à 15 %.

10. Elément suivant l'une des revendications précédentes, dans lequel la proportion pondérale du rhénium représente jusqu'à 15 %.

11. Elément suivant l'une des revendications précédentes, dans lequel la surface est revêtue d'une pellicule constituée au moins partiellement d'oxyde de gallium.

12. Elément suivant l'une des revendications précédentes, dans lequel le reste de l'alliage est du nickel et l'alliage a les proportions pondérales suivantes :
| | |
|---|---|
| cobalt | 5 % à 20 % |
| chrome | 20 % à 30 % |
| aluminium | 5 % à 12 % |
| gallium | 3 % à 8 % |
| yttrium | 0,2 % à 1 % |
| rhénium | 0 % à 5 % |

13. Elément suivant la revendication 12, dans lequel l'alliage a les proportions pondérales suivantes:
| | |
|---|---|
| cobalt | 8 % à 16 % |
| chrome | 21 % à 27 % |
| aluminium | 6 % à 10 % |
| gallium | 4 % à 6 % |
| rhénium | 2 % à 4% |
| yttrium | 0,4 % à 0,8 % |

14. Elément suivant l'une des revendications précédentes, dans lequel l'alliage est déposé en tant que couche de protection sur un substrat métallique, notamment sur un substrat en un superalliage à base de nickel ou à base de cobalt.

15. Elément suivant la revendication 14, dans lequel une couche en céramique perméable au gaz, qui a notamment une structure colonnaire, est déposée sur la surface.

16. Elément suivant la revendication 15, dans lequel la couche en céramique est en un oxyde de zirconium partiellement stabilisé.

17. Elément suivant la revendication 15 ou 16, dans lequel la couche en céramique adhère à une pellicule contenant de l'oxyde de gallium et adhérant à la surface.

18. Elément suivant l'une des revendications 14 à 17, dans lequel le substrat a comme reste du nickel et a les proportions pondérales suivantes :
| | |
|---|---|
| 0,06 % à 0,14 % | de carbone |
| 10 % à 20 % | de chrome |
| 6 % à 11 % | de cobalt |
| 1 % à 3 % | de molybdène |
| 1 % à 6 % | de tungstène |
| 1 % à 6 % | de tantale |
| 0 % à 2 % | de niobium |
| 1 % à 6 % | d'aluminium |
| 1 % à 6 % | de titane |
| 0 % à 0,3 % | de bore |
| 0 % à 0,2 % | de zirconium |
